# EUROPEAN PATENT SPECIFICATION

(11) **EP 4 178 734 B1**
(45) Date of publication and mention of the grant of the patent: **12.06.2024**
(21) Application number: 21730285.0
(22) Date of filing: 19.05.2021
(51) Int. Cl.: B21B 1/26, H02M 7/06, H05B 1/02, H05B 3/00

(54) **A HEATING SYSTEM FOR SEMI-FINISHED METAL PRODUCTS AND A POWER SUPPLY GROUP FOR SAID SYSTEM**
HEIZSYSTEM FÜR HALBFERTIGE METALLPRODUKTE UND STROMVERSORGUNGSGRUPPE FÜR DIESES SYSTEM
SYSTÈME DE CHAUFFAGE POUR PRODUITS MÉTALLIQUES SEMI-FINIS ET GROUPE D'ALIMENTATION POUR LEDIT SYSTÈME

(30) Priority: 09.07.2020 IT 202000016708
(43) Date of publication of application: 17.05.2023
(73) Proprietor: CEA GROUP S.R.L., 25125 Brescia (IT)
(72) Inventor: FUSARI, Oreste, 25125 Brescia (IT)
(74) Representative: De Lorenzo, Danilo
(86) International application number: PCT/IB2021/054323
(87) International publication number: WO 2022/008990

(56) References cited:
- EP-A1- 2 796 760
- JP-A- S5 340 441
- US-A- 4 562 338
- TRUSOV V A ET AL: "PROCEDURE FOR CALCULATING PARAMETERS OF ELECTROCONTACT HEATING OF STEELS BEFORE DEFORMATION", STEEL IN TRANSLATION, ALLERTON PRESS, NEW YORK, NY, US, vol. 27, no. 11, 1997, pages 35-39, XP000787956, ISSN: 0967-0912

## Description

The present invention relates to a system for heating semi-finished metal products, and to a power supply group for said system.

Heating semi-finished products made of steel by means of gas heating furnaces or, in some cases, induction furnaces, until a determined temperature before proceeding with the next step of laminating the semi-finished product is known in the art. Such semi-finished products are typically billets having variable shapes and sizes depending on the specific application.

JPS5340441A discloses a heating system according to the preamble of claim 1.

Inconveniently, in the case of special steels, the heating methods of the prior art are highly inefficient, requiring substantial energy resources to reach the desired temperature before the laminating step.

Furthermore, in the step of heating the semi-finished products, different heating temperatures often need to be reached as a function of the type of steel used and the specific geometry of the semi-finished product. This results in an inefficient management of the cycle of heating the semi-finished products, the transit inside the furnace being required for heating the semi-finished products that require different residence times inside the furnace. In particular, the systems of the known art comprise arranging the semi-finished products on the bogie hearth of the heating furnace, leaving vast sections of bogie hearth devoid of semi-finished products, in order to adapt the different transit times inside the heating furnace as a function of the temperatures to be reached by each semi-finished product. It is apparent that this results in a further decline in the efficiency of the entire heating process.

It is one of the objects of the present invention to overcome the aforesaid limits of the prior art by a heating system for semi-finished metal products and a power supply group for said heating system, capable of solving the above drawbacks of the prior art, allowing the efficiency of the heating system to be improved, particularly for steels with special alloys, while allowing an increase in the versatility in the heating process of the semi-finished products.

According to the invention, the aforesaid objects are achieved by a heating system for semi-finished metal products and a power supply group for said heating system according to the appended independent claims.

Preferred embodiments of the invention are defined in the dependent claims.

The features and advantages of the heating system for semi-finished metal products and the power supply group, according to the present invention, will become apparent from the following description given by way of a non-limiting example, in accordance with the accompanying drawings, in which:

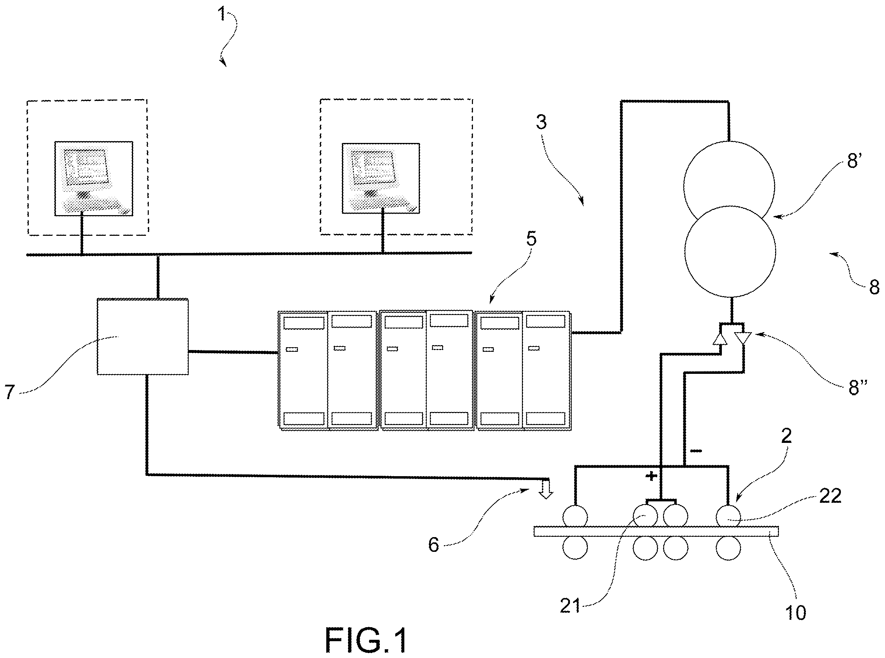

- figure 1 shows a diagram of a heating system for semi-finished metal products according to an embodiment of the present invention;

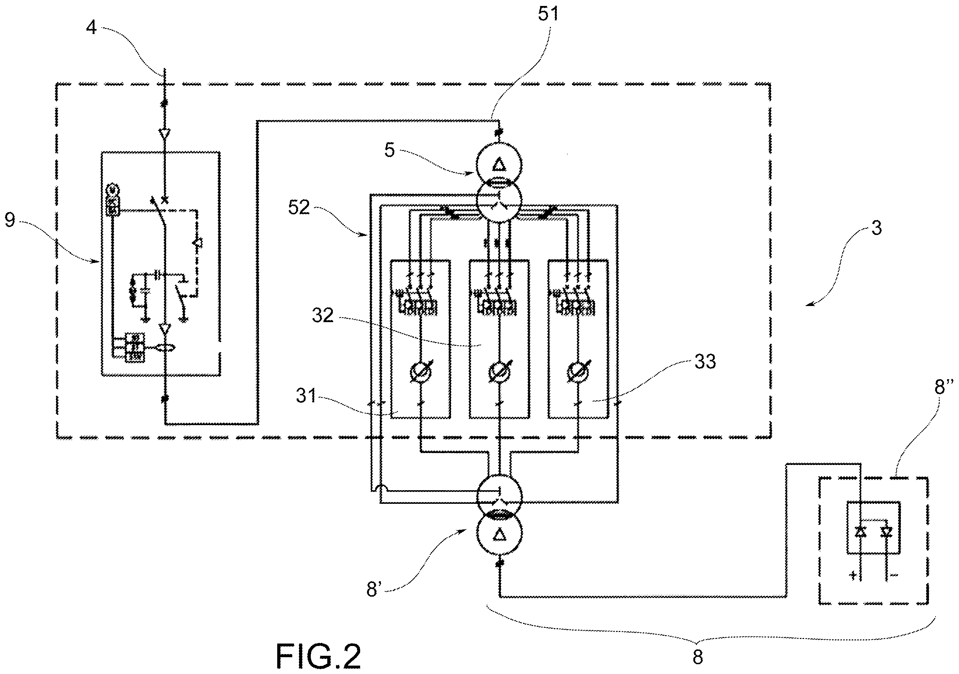

- figure 2 shows an electrical connection diagram of a power supply group for a heating system for semi-finished metal products according to an embodiment of the present invention;

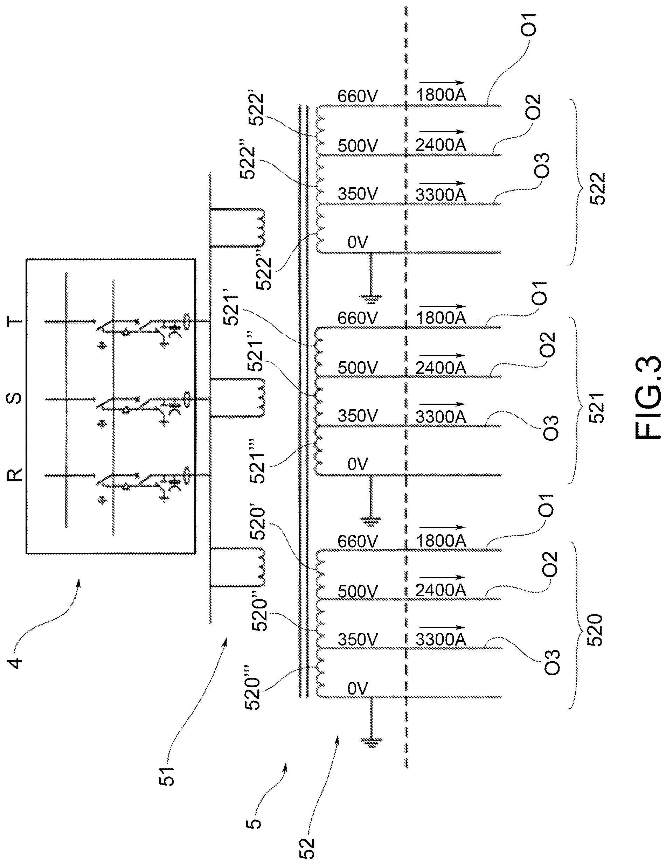

- figure 3 shows, in greater detail, a wiring diagram of a part of the connection diagram in figure 2, with particular reference to an embodiment of an input transformer according to the present invention;
- figure 4 illustrates, in greater detail, a wiring diagram of a power supply group for a heating system for semi-finished metal products according to an embodiment of the present invention, where, for explanation simplicity, an AC-DC converter is not shown.

The transformation of the energy from the level of tens and hundreds of kV of the electric company supply line to the level of voltage needed to supply a heating system for semi-finished metal products is carried out in two phases. A medium voltage cell lowers the voltage from a line of high voltage of the power supply grid 4 to a medium level at an auxiliary distribution station 9, provided with the required protections. Generally, the level of average voltage is standardized for each country (e.g. from 15 to 34.5 kV, depending on the country). The voltage is then adapted according to the needs by the auxiliary distribution station by means of a power supply group, which will be described hereinafter.

In accordance with the accompanying drawings, reference numeral 1 indicates as a whole a heating system 1 for semi-finished metal products. The heating system 1 is suitable for heating a semi-finished metal product 10 in the step immediately prior to a step of laminating such a semi-finished metal product 10. In particular, the heating system 1 is particularly suitable for semi-finished metal products made of steel, even more preferably made of special steel (such as, for example, an AISI 316 or an x 14CrMoS17 or an INCONEL 625) or semi-finished metal products made of titanium alloy, e.g. billets made of steel or titanium alloy having different shapes, designed to be laminated or profiled in a rolling mill, e.g. having sectional diameters even higher than 100 millimeters or indeed 150 millimeters.

Additionally, the heating system 1 according to the present invention is suitable for heating the semi-finished metal product by means of a passage of direct current at temperatures preferably higher than 1000°C, e.g. higher than 1100°C.

According to the invention, the heating system 1 comprises a heating group 2 for the semi-finished metal product 10 comprising a positive contact 21 and a negative contact 22. Such positive 21 and negative 22 contacts are suitable for being connected directly to the semi-finished metal product 10 to determine a current flow in the semi-finished metal product 10 during the heating step. The positive 21 and negative 22 contacts are preferably conductor elements mutually spaced apart along a spacing direction parallel to the main length of the semi-finished metal product and in direct contact with the semi-finished metal product to supply current to the semi-finished product and heat it by Joule effect. For example, such conductor elements can be rotating cylinders gripping the semi-finished metal product, capable of determining the heating of the semi-finished metal product 10 as it gradually passes between the rotating cylinders.

The heating system 1 further comprises a power supply group 3 which is connectable to a power supply grid 4, e.g. through the auxiliary distribution station 9.

The power supply group 3, which is also the subject of the present invention per se, comprises at least a first 31, a second 32, and a third 33 thyristor power controller and an input transformer 5. The input transformer 5 comprises a primary input transformer side 51 which is connectable to the power supply grid 4 and a secondary input transformer side 52 connected to the first 31, second 32, and third 33 thyristor power controllers.

Furthermore, the power supply group 3 comprises an adaptation apparatus 8, comprising an adaptation transformer 8' connected in cascade to the first 31, second 32, and third 33 thyristor power controllers and an AC-DC converter 8".

The adaptation transformer 8' is preferably a high-current transformer, i.e., for example, capable of supplying currents higher than ten thousand Amperes. The AC-DC converter 8" is suitable for converting the alternating current from the adaptation transformer 8' into direct current to be supplied between the positive contact 21 and the negative contact 22. The AC-DC converter is, for example, a diode bridge.

According to an advantageous variant, the input transformer 5 comprises a secondary input transformer side 52, comprising three secondary winding groups 520, 521, 522 mutually shifted, i.e. one for each R, S, T phase of the power supply grid 4. Each of said secondary winding groups 520, 521, 522 comprises a first secondary winding 520', 521', 522', a second secondary winding 520'', 521'', 522'', and a third secondary winding 520''', 521''', 522'''. The first secondary winding 520', 521', 522' is configured to determine a first output voltage on a first output terminal 01, the second secondary winding 520'', 521'', 522'' is configured to determine a second output voltage on a second output terminal O2, and the third secondary winding 520‴, 521''', 522''' is configured to determine a third output voltage on a third output terminal O3. Such first, second, and third output voltages are different from one another. In other words, for example, the first output voltage is equal to about 660V, the second output voltage is equal to about 401V, and the third output voltage is equal to about 276V. This allows three different output voltages to be supplied downstream of the input transformer 5 for each R, S, T phase.

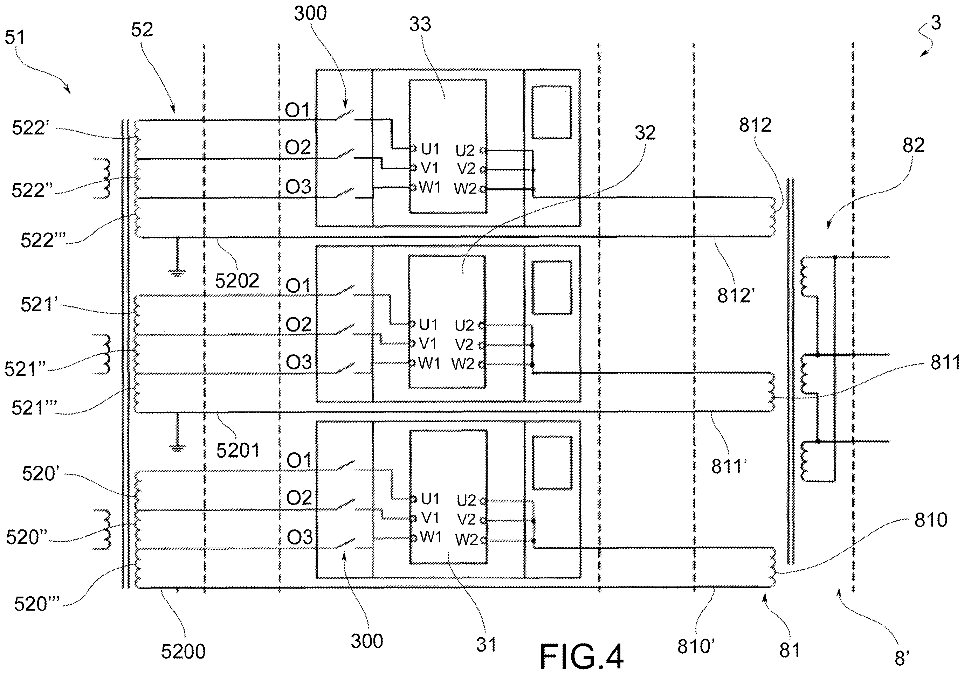

According to a preferred variant, as shown for example in figure 4, each thyristor power controller 31, 32, 33 is a three-phase thyristor power controller, each having a respective input terminal U1, V1, W1 for a respective phase. In this variant, the first output terminal O1 of the first 520, second 521, and third 522 secondary winding groups is connectable to a respective first input terminal U1 of the first 31, second 32, and third 33 thyristor power controllers, respectively. Furthermore, the second output terminal O2 of the first 520, second 521, and third 522 secondary winding groups is connectable to a respective second input terminal V1 of the first 31, second 32, and third 33 thyristor power controllers, respectively. Additionally, the third output terminal O3 of the first 520, second 521, and third 522 secondary winding groups is connectable to a respective third input terminal W1 of the first 31, second 32, and third 33 thyristor power controllers, respectively. This allows the first, second, or third output voltage to be selectively connected from the input transformer 5 to the first 31, second 32, and third 33 thyristor power controllers, for each R, S, T phase.

In other words, when the connection between the first output terminal 01 and the first input terminal U1 is activated, the connections between the second output terminal O2 and the second input terminal V1 and the connection between the third output terminal O3 and the third input terminal W1 are deactivated. Similarly, when the connection between the second output terminal O2 and the first input terminal V1 is activated, the connections between the first output terminal O1 and the first input terminal U1 and the connection between the third output terminal O3 and the third input terminal W1 are deactivated. Equally, when the connection between the third output terminal O3 and the third input terminal W1 is activated, the connections between the first output terminal 01 and the first input terminal U1 and the connection between the second output terminal O2 and the second input terminal V1 are deactivated. This applies for each thyristor controller 31, 32, 33.

In other words, in this variant, the three-phase thyristor controller is not used by connecting the three phases to the input terminals simultaneously, but each RST phase is connected to only one respective thyristor controller, while the input voltage selectively from the secondary winding groups 520, 521, 522 of the secondary input transformer side 52 is selectively connected on the input terminals U1, V1 and W1.

The heating system preferably comprises a plurality of switches 300, adapted to selectively connect the first output terminals O1 of the first 520, second 521, and third 522 secondary winding groups to the respective first input terminals U1 of the first 31, second 32, and third 33 thyristor power controllers, like the second O2 and third O3 output terminals to the respective second V1 and third W1 input terminals of the first 31, second 32, and third 33 thyristor power controllers.

According to an embodiment, the switches 300 are physical connection switches.

According to an advantageous variant, instead, the switches 300 are control switches inside the thyristor controller suitable for activating the specific input terminal, e.g. they are the gate controls on each thyristor. In particular, in this variant, the first output terminals 01, the second output terminals O2, and the third output terminals O3 are preferably always connected to the respective first U1, second V1, and third W1 input terminals of each thyristor power controller 31, 32, 33 and the inner control switches are suitable for enabling each of said first U1, second V1, and third W1 input terminals to enable the connection (and thus the specific voltage value) with the specific first (520', 521', 522'), second (520", 521", 522"), and third (520‴, 521‴, 522‴) secondary windings.

The adaptation transformer 8' preferably comprises a primary adaptation transformer side 81 comprising a first adaptation winding 81 connected to controller output terminals U2, V2, W2 of the first thyristor power controller 31, a second adaptation winding 811 connected to controller output terminals U2, V2, W2 of the second thyristor power controller 32, and a third adaptation winding 812 connected to controller output terminals U2, V2, W2 of the third thyristor power controller 32. In particular, the controller output terminals U2, V2, W2 of each first, second, and third thyristor power controllers 31, 32, 33 are preferably three mutually short-circuited output terminals.

According to a particularly advantageous variant of the present invention, a zero reference voltage point (real or virtual mass) 5200, 5201, 5202 of the first 520, second 521, and third 522 secondary winding groups is directly connected to a respective zero reference voltage point (real or virtual mass) of first adaptation winding 810', to a respective zero reference voltage point of second adaptation winding 811', and to a respective zero reference voltage point of third adaptation winding 812', respectively. Surprisingly, this allows the reduction of disturbances in the circuit and the optimization of the power factor (cosϕ).

The primary input transformer side 51 preferably comprises only one primary winding group comprising one winding for each phase corresponding to a R, S, T phase of the power supply grid 4. Furthermore, the primary adaptation transformer side 81 comprises only one primary winding group 810, 811, 812 comprising one adaptation winding for each phase corresponding to a R, S, T phase of the power supply grid 4.

According to a preferred embodiment, the input transformer 51 is a transformer with triangle-primary winding and open-star-secondary winding. Furthermore, the adaptation transformer 8' is preferably a transformer with open-star-primary winding and triangle-secondary winding.

The heating system 1 preferably comprises a control unit 7 operatively connected to the power supply group 3 for sending control signals to the first 31, second 32, and third 33 thyristor power controllers for the selection and consequent alternative connection of the first O1 or second O2 or third O3 output terminals to each first, second, and third thyristor power controller. In other words, the control unit 7 preferably controls the plurality of switches 100.

Additionally, the heating system 1 preferably comprises a temperature sensor 6, e.g. a laser pyrometer, suitable for detecting the temperature of the semi-finished metal product 10 and operatively connected to the control unit 7. The control unit 7 comprises a processing unit configured to process the temperature signal detected by the temperature sensor 6 and generate a control signal to the first 31, second 32, and third 33 thyristor power controllers as a function of the temperature signal detected, e.g. a control signal for the selection and consequent alternative connection of the first O1 or second O2 or third O3 output terminal to each first, second, and third thyristor power controller, or a control signal for adjusting the power supplied.

It is apparent that the present invention is also intended for a plant comprising said heating system and a rolling mill arranged downstream of said system.

Innovatively, the present invention allows the above drawbacks to be overcome with reference to the known heating techniques.

Additionally, the heating system according to the present invention has high efficiency, especially for steels with special alloys, and simultaneously allows a plurality of different semi-finished metal products to be heated, both in terms of shapes and materials, thus increasing versatility with respect to the systems of the known art.

Advantageously, due to the possibility of varying the voltage and current supplied at the output, it can be flexibly adapted to the different heating needs, not requiring special transformers for each product or costly downtimes for heating between different products.

Furthermore, the described configuration of the power supply group advantageously allows the load on the three phases to be optimized, resulting in high reduction in the peak loads and an effective improvement in the power factor.

In particular, despite supplying heavily inductive loads, the power supply group according to the present invention is nonetheless capable of improving the power factor (cosϕ) introduced into the power supply grid with respect to the value of the power factor recorded on the load, without having to use special compensation systems.

Furthermore, the possibility of using an input transformer provided with multiple voltage outputs for each phase advantageously allows to select the input voltage for each thyristor power controller automatically and flexibly, ensuring a balanced and optimal output voltage-current value for the adaptation transformer, and thus for the load.

Additionally, the present invention allows the voltage imbalances and harmonic distortions on the grid to be reduced.

Additionally, due to the heating of the semi-finished metal product by Joule effect and not by heating in a traditional furnace, the semi-finished metal product is heated more evenly, also in the middle of the semi-finished product and over the whole section. Furthermore, in a particularly advantageous manner, the heating times are considerably reduced with respect to the traditional techniques.

It is apparent that those skilled in the art may make changes to the above-described invention in order to meet specific and contingent needs, all contained within the scope of protection as defined by the following claims.

## Claims

1. A heating system (1) for semi-finished metal products, for heating a semi-finished metal product (10) immediately prior to a step of laminating the semi-finished product (10) comprising:
- a heating group (2) for the semi-finished metal product (10) comprising a positive contact (21) and a negative contact (22), said positive (21) and negative (22) contacts being suitable for being directly connected to the semi-finished metal product (10) to determine a current flow in the semi-finished metal product (10) during the heating step; and
- a power supply group (3) connectable to a power supply grid (4) comprising:
- at least a first (31), a second (32) and a third thyristor power controller (33); and
an adaptation apparatus (8) comprising an adaptation transformer (8') connected in cascade to the first (31), second (32) and third thyristor power controllers (33), and an AC-DC converter (8"), said AC-DC converter (8") being suitable for converting the alternating current from the adaptation transformer (8') into direct current to be supplied between the positive contact (21) and the negative contact (22);
said heating system being **characterized in that** the power supply group comprises
- an input transformer (5) comprising :
a primary input transformer side (51) connectable to the power supply grid (4), and a secondary input transformer side (52) connected to the first (31), second (32) and third thyristor power controllers (33);
and **in that** the input transformer (5) comprises a secondary input transformer side (52) comprising three secondary winding groups (520, 521, 522) mutually shifted, i.e. one for each phase, each of said secondary winding groups (520, 521, 522) comprising a first secondary winding (520', 521', 522'), a second secondary winding (520", 521", 522") and a third secondary winding (520‴, 521‴, 522‴), wherein the first secondary winding (520', 521', 522') is configured to determine a first output voltage on a first output terminal (O1), the second secondary winding (520'', 521", 522") is configured to determine a second output voltage on a second output terminal (O2), and the third secondary winding (520‴, 521‴, 522‴) is configured to determine a third output voltage on a third output terminal (03), said first, second and third output voltages being mutually different.

2. Heating system (1) according to claim 1, wherein the first output terminal (O1) of the first (520), second (521) and third secondary winding groups (522) is connected to a respective first input terminal (U1) of the first (31), second (32) and third thyristor power controllers (33), respectively,
wherein the second output terminal (O2) of the first (520), second (521) and third secondary winding groups (522) is connected to a respective second input terminal (V1) of the first (31), second (32) and third thyristor power controllers (33), respectively,
and wherein the third output terminal (O3) of the first (520), second (521) and third secondary winding groups (522) is connected to a respective third input terminal (W1) of the first (31), second (32) and third thyristor power controllers (33), respectively.

3. Heating system (1) according to any one of the preceding claims, wherein the adaptation transformer (8') comprises a primary adaptation transformer side (81) comprising a first adaptation winding (810) connected to the controller output terminals (U2, V2, W2) of the first thyristor power controller (31), a second adaptation winding (811) connected to the controller output terminals (U2, V2, W2) of the second thyristor power controller (32), a third adaptation winding (812) connected to the controller output terminals (U2, V2, W2) of the third thyristor power controller (33).

4. Heating system (1) according to claim 3, wherein the controller output terminals (U2, V2, W2) of each first, second and third controller (31, 32, 33) are three output terminals mutually short-circuited.

5. Heating system (1) according to any one of the preceding claims, wherein a zero reference voltage point (5200, 5201, 5202) of the first (520), second (521) and third secondary winding groups (522) is directly connected to a respective zero reference voltage point (810') of first adaptation winding, a respective zero reference voltage point (811') of second adaptation winding, and a respective zero reference voltage point (812') of third adaptation winding, respectively.

6. Heating system (1) according to any one of the preceding claims, wherein the primary input transformer side (51) comprises only one primary winding group comprising a winding for each phase corresponding to a phase (R, S, T) of the power supply grid (4), and the primary adaptation transformer side (81) comprises only one primary winding group (810, 811, 812) comprising an adaptation winding for each phase corresponding to a phase (R, S, T) of the power supply grid (4).

7. Heating system (1) according to any one of the preceding claims, wherein the input transformer (51) is a triangle-primary winding and star-secondary winding transformer, and the adaptation transformer (8') is a star-primary winding and triangle-secondary winding transformer.

8. Heating system (1) according to any one of claims 2 to 7, comprising a control unit (7) operatively connected to the power supply group (3) for sending control signals to the first, second and third thyristor power controllers for the selection and consequent alternative connection of the first (O1) or second (O2) or third (O3) output terminal to each first, second and third thyristor power controller.

9. Heating system (1) according to claim 8, comprising a temperature sensor (6) suitable for detecting the temperature of the semi-finished metal product (10) and operatively connected to the control unit (7), said control unit (7) comprises a processing unit configured to process the temperature signal detected by the temperature sensor (6) and generate a control signal to the first, second and third thyristor power controllers as a function of the temperature signal detected, for example, a control signal for the selection and consequent alternative connection of the first (O1) or second (O2) or third output terminal (O3) to each first, second and third thyristor power controller.

10. A power supply group (3) connectable to a power supply grid (4) comprising:
- at least a first (31), a second (32) and a third thyristor power controller (33);
- an adaptation apparatus (8) comprising an adaptation transformer (8') connected in cascade to the first (31), second (32) and third thyristor power controllers (33), and an AC-DC converter (8"), said AC-DC converter (8") being suitable for converting the alternating current from the adaptation transformer (8') into direct current;
**characterised in that** the power supply group (3) comprises an input transformer (5) comprising a primary input transformer side (51) connectable to the power supply grid (4), and a secondary input transformer side (52) connected to the first (31), second (32) and third thyristor power controllers (33);
said secondary input transformer side (52) comprises three secondary winding groups (520, 521, 522) mutually shifted, i.e. one for each phase, each of said secondary winding groups (520, 521, 522) comprising a first secondary winding (520', 521', 522'), a second secondary winding (520", 521", 522") and a third secondary winding (520‴, 521‴, 522‴), wherein the first secondary winding (520', 521', 522') is configured to determine a first output voltage on a first output terminal (O1), the second secondary winding (520", 521", 522") is configured to determine a second output voltage on a second output terminal (O2), and the third secondary winding (520‴, 521‴, 522‴) is configured to determine a third output voltage on a third output terminal (O3), said first, second and third output voltages being mutually different.

11. A plant comprising a heating system according to any one of claims 1 to 9 and a rolling mill arranged downstream of the heating system (1).

## Patentansprüche

1. Heizsystem (1) für Metallhalbzeuge zum Erwärmen eines Metallhalbzeugs (10) unmittelbar vor einem Schritt des Laminierens des Halbzeugs (10), aufweisend:
- eine Heizgruppe (2) für das Metallhalbzeug (10), umfassend einen positiven Kontakt (21) und einen negativen Kontakt (22), wobei der positive Kontakt (21) und der negative Kontakt (22) geeignet sind, direkt mit dem Metallhalbzeug (10) verbunden zu werden, um einen Stromfluss in dem Metallhalbzeug (10) während des Heizschritts zu bestimmen; und
- eine Energieversorgungsgruppe (3), die an ein Energieversorgungsnetz (4) anschließbar ist, umfassend:
- mindestens einen ersten (31), einen zweiten (32) und einen dritten Thyristor-Leistungs-Controller (33); und
eine Anpassungsvorrichtung (8), umfassend einen Anpassungstransformator (8'), der in Kaskade mit dem ersten (31), zweiten (32) und dritten Thyristor-Leistungs-Controller (33) geschaltet ist, und einen AC-DC-Wandler (8"), wobei der AC-DC-Wandler (8") geeignet ist, den Wechselstrom aus dem Anpassungstransformator (8') in Gleichstrom umzuwandeln, der zwischen dem positiven Kontakt (21) und dem negativen Kontakt (22) zuzuführen ist;
wobei das Heizsystem **dadurch gekennzeichnet ist, dass** die Energieversorgungsgruppe einen Eingangstransformator (5) aufweist, welcher aufweist:
eine primäre Eingangstransformatorseite (51), die mit dem Energieversorgungsnetz (4) verbindbar ist, und
eine sekundäre Eingangstransformatorseite (52), die mit dem ersten (31), zweiten (32) und dritten Thyristor-Leistungs-Controller (33) verbindbar ist;
und dass der Eingangstransformator (5) eine sekundäre Eingangstransformatorseite (52) aufweist, welche drei gegeneinander verschobene Sekundärwicklungsgruppen (520, 521, 522) aufweist, d. h. eine für jede Phase, wobei jede der Sekundärwicklungsgruppen (520, 521, 522) eine erste Sekundärwicklung (520', 521', 522'), eine zweite Sekundärwicklung (520", 521", 522") und eine dritte Sekundärwicklung (520‴, 521‴, 522‴) aufweist, wobei die erste Sekundärwicklung (520', 521', 522') derart konfiguriert ist, dass sie eine erste Ausgangsspannung an einem ersten Ausgangsanschluss (01) bestimmt, die zweite Sekundärwicklung (520", 521", 522") derart konfiguriert ist, dass sie eine zweite Ausgangsspannung an einem zweiten Ausgangsanschluss (02) bestimmt, und die dritte Sekundärwicklung (520‴, 521‴, 522‴) derart konfiguriert ist, dass sie eine dritte Ausgangsspannung an einem dritten Ausgangsanschluss (03) bestimmt, wobei sich die erste, zweite und dritte Ausgangsspannung voneinander unterscheiden.

2. Heizsystem (1) nach Anspruch 1, wobei der erste Ausgangsanschluss (01) der ersten (520), zweiten (521) und dritten Sekundärwicklungsgruppe (522) mit einem jeweiligen ersten Eingangsanschluss (U1) des ersten (31), zweiten (32) und dritten Thyristor-Leistungs-Controllers (33) verbunden ist,
wobei der zweite Ausgangsanschluss (02) der ersten (520), zweiten (521) und dritten Sekundärwicklungsgruppe (522) mit einem jeweiligen zweiten Eingangsanschluss (V1) des ersten (31), zweiten (32) und dritten Thyristor-Leistungs-Controllers (33) verbunden ist,
und wobei der dritte Ausgangsanschluss (03) der ersten (520), zweiten (521) und dritten Sekundärwicklungsgruppe (522) mit einem jeweiligen dritten Eingangsanschluss (W1) des ersten (31), zweiten (32) und dritten Thyristor-Leistungs-Controllers (33) verbunden ist.

3. Heizsystem (1) nach einem der vorstehenden Ansprüche, wobei der Anpassungstransformator (8') eine primäre Anpassungstransformatorseite (81) aufweist, welche eine erste Anpassungswicklung (810), die mit den Steuerungsausgangsanschlüssen (U2, V2, W2) des ersten Thyristor-Leistungs-Controllers (31) verbunden ist, eine zweite Anpassungswicklung (811), die mit den Steuerungsausgangsanschlüssen (U2, V2, W2) des zweiten Thyristor-Leistungs-Controllers (32) verbunden ist, eine dritte Anpassungswicklung (812), die mit den Steuerungsausgangsanschlüssen (U2, V2, W2) des dritten Thyristor-Leistungs-Controllers (33) verbunden ist, aufweist.

4. Heizsystem (1) nach Anspruch 3, wobei die Steuerungsausgangsanschlüsse (U2, V2, W2) jedes ersten, zweiten und dritten Controllers (31, 32, 33) drei gegenseitig kurzgeschlossene Ausgangsanschlüsse sind.

5. Heizsystem (1) nach einem der vorstehenden Ansprüche, wobei eine Nullspannung-Referenzstelle (5200, 5201, 5202) der ersten (520), zweiten (521) und dritten Sekundärwicklungsgruppe (522) direkt mit einer jeweiligen Nullspannung-Referenzstelle (810') der ersten Anpassungswicklung, einer jeweiligen Nullspannung-Referenzstelle (811') der zweiten Anpassungswicklung und einer jeweiligen Nullspannung-Referenzstelle (812') der dritten Anpassungswicklung verbunden ist.

6. Heizsystem (1) nach einem der vorstehenden Ansprüche, wobei die primäre Eingangstransformatorseite (51) nur eine einzelne Primärwicklungsgruppe aufweist, welche eine Wicklung für jede Phase aufweist, die einer Phase (R, S, T) des Energieversorgungsnetzes (4) entspricht, und die primäre Anpassungstransformatorseite (81) nur eine einzelne Primärwicklungsgruppe (810, 811, 812) aufweist, welche eine Anpassungswicklung für jede Phase aufweist, die einer Phase (R, S, T) des Energieversorgungsnetzes (4) entspricht.

7. Heizsystem (1) nach einem der vorstehenden Ansprüche, wobei der Eingangstransformator (51) ein Transformator mit Dreiecksprimärwicklung und Sternsekundärwicklung ist und der Anpassungstransformator (8') ein Transformator mit Sternprimärwicklung und Dreiecksekundärwicklung ist.

8. Heizsystem (1) nach einem der Ansprüche 2 bis 7, aufweisend eine Steuereinheit (7), die mit der Energieversorgungsgruppe (3) wirkverbunden ist, um Steuersignale an den ersten, zweiten und dritten Thyristor-Leistungs-Controller zu senden, um den ersten (01) oder zweiten (02) oder dritten (03) Ausgangsanschluss auszuwählen und folglich alternativ mit jedem ersten, zweiten und dritten Thyristor-Leistungs-Controller zu verbinden.

9. Heizsystem (1) nach Anspruch 8, aufweisend einen Temperatursensor (6), der zum Erfassen der Temperatur des Metallhalbzeugs (10) geeignet und mit der Steuereinheit (7) wirkverbunden ist, wobei die Steuereinheit (7) eine Verarbeitungseinheit umfasst, die so konfiguriert ist, dass sie das Temperatursignal verarbeitet, das von dem Temperatursensor (6) erfasst wird und ein Steuersignal für den ersten, zweiten und dritten Thyristor-Leistungs-Controller als Funktion des erfassten Temperatursignals erzeugt, um beispielsweise den ersten (01) oder zweiten (02) oder dritten (03) Ausgangsanschluss auszuwählen und folglich alternativ mit jedem ersten, zweiten und dritten Thyristor-Leistungs-Controller zu verbinden.

10. Energieversorgungsgruppe (3), die an ein Energieversorgungsnetz (4) anschließbar ist, aufweisend:
- zumindest einen ersten (31), einen zweiten (32) und einen dritten Thyristor-Leistungs-Controller (33);
- eine Anpassungsvorrichtung (8), aufweisend einen Anpassungstransformator (8'), der in Kaskade mit dem ersten (31), zweiten (32) und dritten Thyristor-Leistungs-Controller (33) geschaltet ist, und einen AC-DC-Wandler (8"), wobei der AC-DC-Wandler (8") geeignet ist, den Wechselstrom aus dem Anpassungstransformator (8') in Gleichstrom umzuwandeln;
**dadurch gekennzeichnet, dass** die Energieversorgungsgruppe (3) einen Eingangstransformator (5) aufweist, der eine primäre Eingangstransformatorseite (51), die mit dem Energieversorgungsnetz (4) verbindbar ist, und eine sekundäre Eingangstransformatorseite (52) aufweist, die mit dem ersten (31), zweiten (32) und dritten Thyristor-Leistungs-Controller (33) verbunden ist;
die sekundäre Eingangstransformatorseite (52) drei Sekundärwicklungsgruppen (520, 521, 522) aufweist, die gegeneinander verschoben sind, d.h. eine für jede Phase, wobei jede der Sekundärwicklungsgruppen (520, 521, 522) eine erste Sekundärwicklung (520', 521', 522'), eine zweite Sekundärwicklung (520", 521", 522") und eine dritte Sekundärwicklung (520‴, 521‴, 522‴) aufweist, wobei die erste Sekundärwicklung (520', 521', 522') derart konfiguriert ist, dass sie eine erste Ausgangsspannung an einem ersten Ausgangsanschluss (01) bestimmt, die zweite Sekundärwicklung (520", 521", 522") derart konfiguriert ist, dass sie eine zweite Ausgangsspannung an einem zweiten Ausgangsanschluss (02) bestimmt, und die dritte Sekundärwicklung (520‴, 521‴, 522‴) derart konfiguriert ist, dass sie eine dritte Ausgangsspannung an einem dritten Ausgangsanschluss (03) bestimmt, wobei sich die erste, zweite und dritte Ausgangsspannung voneinander unterscheiden.

11. Anlage, aufweisend ein Heizsystem nach einem der Ansprüche 1 bis 9, und ein Walzwerk, das dem Heizsystem (1) nachgeschaltet angeordnet ist.

## Revendications

1. Système de chauffage (1) pour produits métalliques semi-finis, pour chauffer un produit métallique semi-fini (10) immédiatement avant une étape de stratification du produit semi-fini (10) comprenant :
- un groupe de chauffage (2) pour le produit métallique semi-fini (10) comprenant un contact positif (21) et un contact négatif (22), lesdits contacts positif (21) et négatif (22) étant appropriés pour être directement connectés au produit métallique semi-fini (10) afin de déterminer un flux de courant dans le produit métallique semi-fini (10) lors de l'étape de chauffage ; et
- un groupe d'alimentation électrique (3) pouvant être connecté à un réseau d'alimentation électrique (4) comprenant :
- au moins un premier (31), un deuxième (32) et un troisième contrôleur de puissance à thyristor (33) ; et
un appareil d'adaptation (8) comprenant un transformateur d'adaptation (8') connecté en cascade au premier (31), au deuxième (32) et au troisième contrôleur de puissance à thyristor (33), et un convertisseur CA-CC (8"), ledit convertisseur CA-CC (8") étant approprié pour convertir le courant alternatif provenant du transformateur d'adaptation (8') en courant continu devant être fourni entre le contact positif (21) et le contact négatif (22) ;
ledit système de chauffage étant **caractérisé en ce que** le groupe d'alimentation électrique comprend un transformateur d'entrée (5) comprenant :
un côté transformateur d'entrée primaire (51) pouvant être connecté au réseau d'alimentation électrique (4),
et un côté transformateur d'entrée secondaire (52) connecté au premier (31), au deuxième (32) et au troisième contrôleur de puissance à thyristor (33) ;
et **en ce que** le transformateur d'entrée (5) comprend un côté transformateur d'entrée secondaire (52) comprenant trois groupes d'enroulements secondaires (520, 521, 522) mutuellement décalés, c'est-à-dire un pour chaque phase, chacun desdits groupes d'enroulements secondaires (520, 521, 522) comprenant un premier enroulement secondaire (520', 521', 522'), un deuxième enroulement secondaire (520", 521", 522") et un troisième enroulement secondaire (520‴, 521‴, 522‴), dans lequel le premier enroulement secondaire (520', 521', 522') est configuré pour déterminer une première tension de sortie sur une première borne de sortie (O1), le deuxième enroulement secondaire (520", 521", 522") est configuré pour déterminer une deuxième tension de sortie sur une deuxième borne de sortie (O2) et le troisième enroulement secondaire (520‴, 521‴, 522‴) est configuré pour déterminer une troisième tension de sortie sur une troisième borne de sortie (O3), lesdites première, deuxième et troisième tensions de sortie étant mutuellement différentes.

2. Système de chauffage (1) selon la revendication 1, dans lequel la première borne de sortie (O1) du premier (520), du deuxième (521) et du troisième groupe d'enroulements secondaires (522) est connectée à une première borne d'entrée (U1) respective du premier (31), du deuxième (32) et du troisième contrôleur de puissance à thyristor (33), respectivement,
dans lequel la deuxième borne de sortie (O2) du premier (520), du deuxième (521) et du troisième groupe d'enroulements secondaires (522) est connectée à une deuxième borne d'entrée (V1) respective du premier (31), du deuxième (32) et du troisième contrôleur de puissance à thyristor (33), respectivement,
et dans lequel la troisième borne de sortie (O3) du premier (520), du deuxième (521) et du troisième groupe d'enroulements secondaires (522) est connectée à une troisième borne d'entrée (W1) respective du premier (31), du deuxième (32) et du troisième contrôleur de puissance à thyristor (33), respectivement.

3. Système de chauffage (1) selon l'une quelconque des revendications précédentes, dans lequel le transformateur d'adaptation (8') comprend un côté transformateur d'adaptation primaire (81) comprenant un premier enroulement d'adaptation (810) connecté aux bornes de sortie de contrôleur (U2, V2, W2) du premier contrôleur de puissance à thyristor (31), un deuxième enroulement d'adaptation (811) connecté aux bornes de sortie de contrôleur (U2, V2, W2) du deuxième contrôleur de puissance à thyristor (32), un troisième enroulement d'adaptation (812) connecté aux bornes de sortie de contrôleur (U2, V2, W2) du troisième contrôleur de puissance à thyristor (33).

4. Système de chauffage (1) selon la revendication 3, dans lequel les bornes de sortie de contrôleur (U2, V2, W2) de chacun des premier, deuxième et troisième contrôleurs (31, 32, 33) sont trois bornes de sortie mutuellement court-circuitées.

5. Système de chauffage (1) selon l'une quelconque des revendications précédentes, dans lequel un point de tension de référence de zéro (5200, 5201, 5202) du premier (520), du deuxième (521) et du troisième groupe d'enroulements secondaires (522) est directement connecté à un point de tension de référence de zéro (810') respectif du premier enroulement d'adaptation, à un point de tension de référence de zéro (811') respectif du deuxième enroulement d'adaptation et à un point de tension de référence de zéro (812') respectif du troisième enroulement d'adaptation, respectivement.

6. Système de chauffage (1) selon l'une quelconque des revendications précédentes, dans lequel le côté transformateur d'entrée primaire (51) comprend un seul groupe d'enroulements primaires comprenant un enroulement pour chaque phase correspondant à une phase (R, S, T) du réseau d'alimentation électrique (4), et le côté transformateur d'adaptation primaire (81) comprend un seul groupe d'enroulements primaires (810, 811, 812) comprenant un enroulement d'adaptation pour chaque phase correspondant à une phase (R, S, T) du réseau d'alimentation électrique (4).

7. Système de chauffage (1) selon l'une quelconque des revendications précédentes, dans lequel le transformateur d'entrée (51) est un transformateur à enroulements primaires en triangle et à enroulements secondaires en étoile, et le transformateur d'adaptation (8') est un transformateur à enroulements primaires en étoile et à enroulements secondaires en triangle.

8. Système de chauffage (1) selon l'une quelconque des revendications 2 à 7, comprenant une unité de commande (7) connectée de manière fonctionnelle au groupe d'alimentation électrique (3) pour envoyer des signaux de commande aux premier, deuxième et troisième contrôleurs de puissance à thyristor pour la sélection et la connexion alternative consécutive de la première (O1), ou de la deuxième (O2) ou de la troisième (O3) borne de sortie à chacun des premier, deuxième et troisième contrôleurs de puissance à thyristor.

9. Système de chauffage (1) selon la revendication 8, comprenant un capteur de température (6) approprié pour détecter la température du produit métallique semi-fini (10) et connecté de manière fonctionnelle à l'unité de commande (7), ladite unité de commande (7) comprend une unité de traitement configurée pour traiter le signal de température détecté par le capteur de température (6) et générer un signal de commande vers les premier, deuxième et troisième contrôleurs de puissance à thyristor en fonction du signal de température détecté, par exemple un signal de commande pour la sélection et la connexion alternative consécutive de la première (O1), ou de la deuxième (O2) ou de la troisième borne de sortie (O3) à chacun des premier, deuxième et troisième contrôleurs de puissance à thyristor.

10. Groupe d'alimentation électrique (3) pouvant être connecté à un réseau d'alimentation électrique (4) comprenant :
- au moins un premier (31), un deuxième (32) et un troisième contrôleur de puissance à thyristor (33) ;
- un appareil d'adaptation (8) comprenant un transformateur d'adaptation (8') connecté en cascade au premier (31), au deuxième (32) et au troisième contrôleur de puissance à thyristor (33), et un convertisseur CA-CC (8"), ledit convertisseur CA-CC (8") étant approprié pour convertir le courant alternatif provenant du transformateur d'adaptation (8') en courant continu ;
**caractérisé en ce que** le groupe d'alimentation électrique (3) comprend un transformateur d'entrée (5) comprenant un côté transformateur d'entrée primaire (51) pouvant être connecté au réseau d'alimentation électrique (4) et un côté transformateur d'entrée secondaire (52) connecté au premier (31), au deuxième (32) et au troisième contrôleur de puissance à thyristor (33) ;
ledit côté transformateur d'entrée secondaire (52) comprend trois groupes d'enroulements secondaires (520, 521, 522) mutuellement décalés, c'est-à-dire un pour chaque phase, chacun desdits groupes d'enroulements secondaires (520, 521, 522) comprenant un premier enroulement secondaire (520', 521', 522'), un deuxième enroulement secondaire (520", 521", 522") et un troisième enroulement secondaire (520‴, 521‴, 522‴), dans lequel le premier enroulement secondaire (520', 521', 522') est configuré pour déterminer une première tension de sortie sur une première borne de sortie (O1), le deuxième enroulement secondaire (520", 521", 522") est configuré pour déterminer une deuxième tension de sortie sur une deuxième borne de sortie (O2) et le troisième enroulement secondaire (520‴, 521‴, 522‴) est configuré pour déterminer une troisième tension de sortie sur une troisième borne de sortie (O3), lesdites première, deuxième et troisième tensions de sortie étant mutuellement différentes.

11. Installation comprenant un système de chauffage selon l'une quelconque des revendications 1 à 9 et un laminoir agencé en aval du système de chauffage (1).
